# DEMANDE DE BREVET EUROPEEN

(11) **EP 0 919 494 A1**
(43) Date de publication de la demande: **02.06.1999**
(21) Numéro de dépôt: 97402716.1
(22) Date de dépôt: 13.11.1997
(51) Int. Cl.: B65G 21/14, B65G 43/08

(54) **Procédé et dispositif pour positionner des produits sur un système de transfert, constitué par deux convoyeurs**

(71) Demandeur: FL Concept, 44335 Nantes Cedex 3 (FR)
(72) Inventeur: Carabin, Philippe, 44230 St-Sebastien Sur Loire (FR); Fleury, Eric, 44300 Nantes (FR); Abert, Bernard, 44400 Reze (FR)
(74) Mandataire: Phélip, Bruno

(57) **Abrégé**

Le procédé pour positionner précisément des produits sur un système de transfert en vue d'alimenter un appareil récepteur aval, ledit système de transfert étant constitué d'un transporteur d'entrée (4) et d'un transporteur de sortie (6) entre lesquels est défini un front de transition (40) à position variable, est caractérisé par le fait qu'il consiste à détecter la position de chaque produit (9) en amont du front de transition (40) puis, lors de chaque détection, à ajuster la position du front de transition (40) pour assurer un positionnement correct du produit (9) sur le transporteur de sortie (6), en fonction des besoins de l'appareil récepteur aval.

L'invention concerne également le dispositif pour la mise en oeuvre du procédé.

## Description

La présente invention concerne un procédé et un dispositif pour positionner précisément des produits sur un système de transfert en vue d'alimenter un appareil récepteur, ledit système de transfert étant constitué d'un transporteur d'entrée et d'un transporteur de sortie entre lesquels est défini un front de transition à position variable.

Cette invention peut par exemple être appliquée dans le domaine de la fabrication des biscuits, le système de transfert étant positionné entre l'unité de fabrication proprement dite et la machine de conditionnement.

Dans le domaine de la fabrication en continu d'articles tels que des biscuits, pizzas... la liaison entre certaines des machines de la chaîne technologique est réalisée par des transporteurs sans fin, du type à tapis ou à courroies. En règle générale, l'appareil récepteur aval doit être alimenté régulièrement et les systèmes de transfert précités sont adaptés pour absorber les à-coups de production de la ou des machines amont, en vue de régulariser le flux des produits.

Le document FR-A-2 499 033 montre une installation de ce type pour régulariser en continu le transfert de produits solides identiques entre un appareil débiteur amont et un appareil récepteur aval. Cette installation consiste en fait en un système d'accumulation qui permet, à partir d'un pas maximal constant, d'effectuer une réduction de pas au niveau d'un front de transition entre un transporteur d'entrée et un transporteur de sortie. Le transporteur d'entrée est du type à accumulation de bande et son extrémité aval est portée par un chariot mobile qui se déplace au-dessus du transporteur de sortie; l'extrémité aval du transporteur d'entrée se prolonge par un déversoir en forme de pan incliné qui permet le transfert "en douceur" des produits sur le brin actif du transporteur de sortie.
La vitesse du transporteur d'entrée est réglée en fonction du débit de la machine amont et la vitesse du transporteur de sortie est réglée en fonction du débit de la machine aval.

Cette installation comporte des moyens qui permettent de détecter la présence des produits en amont du front de transition et la position de ce front est réglée en fonction des anomalies observées dans le flux des produits.
La gestion de la position du front de transition s'effectue par des moyens mécaniques (embrayages, poulies différentielles ...) et par l'intermédiaire d'un commutateur à deux positions. Lorsque les produits défilent normalement sous les moyens de détection, le commutateur est basculé dans une première position qui assure le déplacement du front de transition en fonction des débits relatifs des appareils amont et aval. Si les débits sont égaux, le chariot ne se déplace pas ; si les débits varient quelque peu, il se déplace vers l'amont ou vers l'aval pour absorber cette variation.
Lorsqu'il y a rupture du flux, le commutateur bascule dans une seconde position de telle sorte que le front de transition soit déplacé à la même vitesse que le transporteur de sortie de façon à garantir la continuité du flux sur le tapis de sortie.

Cette installation ne peut remplir qu'une fonction d'accumulation et elle ne peut fonctionner convenablement que si les produits arrivent sur le transporteur d'entrée avec un pas constant.

La présente invention a pour but de proposer un procédé et un dispositif de transfert susceptibles de permettre une gestion plus élaborée du flux des produits et indépendante de la régularité d'approvisionnement.

Un autre but de l'invention est d'assurer une gestion très polyvalente du système de transfert pour permettre le groupage, le dégroupage, l'alignement, le phasage voire même le redressement des produits en vue d'alimenter l'appareil récepteur aval, cette gestion du transfert étant réalisée de façon très fine en fonction des besoins précis de l'appareil récepteur aval.

Le procédé conforme à la présente invention, pour positionner précisément des produits sur un système de transfert en vue d'alimenter un appareil récepteur aval, ledit système de transfert étant constitué d'un transporteur d'entrée et d'un transporteur de sortie entre lesquels est défini un front de transition à position variable, est caractérisé par le fait qu'il consiste à détecter la position de chaque produit en amont du front de transition puis, à partir de chaque détection, à ajuster la position dudit front de transition pour assurer un positionnement correct du produit sur le transporteur de sortie, en fonction des besoins de l'appareil récepteur aval.

L'invention concerne également le dispositif pour la mise en oeuvre du procédé. Conformément à l'invention, ce dispositif comporte :
- des moyens qui permettent de déterminer la position des produits sur le transporteur d'entrée,
- des moyens qui permettent de déterminer l'endroit où doit être déposé le produit sur le transporteur de sortie,
- des moyens qui permettent de déterminer la position du front de transition et,
- des moyens qui permettent de déplacer ledit front de transition pour le placer de telle sorte que le produit soit déposé à l'endroit correct prédéterminé sur le transporteur de sortie.

Selon une forme de réalisation préférée, ce dispositif est constitué d'un transporteur d'entrée et d'un transporteur de sortie disposés dans la continuité l'un de l'autre, orientés dans le même sens et dont les brins actifs qui supportent les produits s'étendent sensiblement dans le même plan. Ces deux transporteurs sont assujettis à des moyens moteurs qui permettent de leur conférer une vitesse différente et ils définissent un front de transition entre l'extrémité aval du transporteur d'entrée et l'extrémité amont du transporteur de sortie. Ce dispositif est également constitué de moyens qui permettent de faire varier la position du front de transition entre l'appareil amont et l'appareil aval, ainsi que de moyens de détection de la position des produits en amont de ce front de transition. Ces moyens de détection sont reliés à des moyens de gestion électroniques et informatiques qui commandent, notamment, le déplacement du front de transition, selon le positionnement des produits que l'on veut obtenir sur le transporteur de sortie, en fonction des besoins de l'appareil aval.

Selon une autre caractéristique, le dispositif comporte des moyens moteurs distincts pour l'entraînement des transporteurs d'entrée et de sortie.

Selon une autre caractéristique de l'invention, le dispositif comporte deux transporteurs du type à accumulation de bande, munis chacun d'un brin actif supérieur et d'un bras retour inférieur qui sert au stockage de l'excès de bande. L'extrémité amont du brin actif du transporteur d'entrée et l'extrémité aval du brin actif du transporteur de sortie sont immobiles pour définir une longueur totale fixe des deux brins actifs des transporteurs ; le brin actif supérieur de chaque transporteur a une longueur variable, fonction de la position du front de transition mobile.

Selon une autre caractéristique préférée, l'extrémité aval du transporteur d'entrée et l'extrémité amont du transporteur de sortie sont portées par un chariot supérieur guidé sur un système de rails parallèles aux brins actifs desdits transporteurs. Ce chariot permet le déplacement du front de transition des deux transporteurs et il porte les moyens qui permettent de déterminer la position des produits en amont du front de transition.

Toujours selon l'invention, le dispositif comporte des transporteurs à bande sans fin dont les bras retours inférieurs se rejoignent pour former une boucle fermée. L'extrémité amont du transporteur d'entrée et l'extrémité aval du transporteur de sortie sont portées par un chariot inférieur guidé sur un système de rails parallèles aux brins actifs desdits transporteurs.

Toujours selon l'invention, les chariots supérieur et inférieur sont reliés par un système mécanique qui permet leur assujettisement pour assurer leur déplacement simultané, égal et en sens opposé.

Selon une première forme de réalisation, ce système mécanique consiste en une chaîne sans fin qui relie les deux chariots supérieur et inférieur et qui est montée sur des organes fous de renvoi ; l'entraînement du chariot inférieur est assuré par un système complémentaire, du type à chaîne sans fin motorisée, dont la motorisation est assujettie aux moyens de gestion électroniques et informatiques.

Selon une autre forme de réalisation, la chaîne sans fin qui relie les deux chariots supérieur et inférieur est montée sur des organes de renvoi dont l'un est motorisé pour assurer le déplacement du front de transition.

Selon une autre caractéristique particulièrement intéressante, la chaîne sans fin qui relie les deux chariots supérieur et inférieur supporte des moyens de soutien, en forme de rouleaux fous par exemple, adaptés pour supporter une partie au moins des brins actifs des transporteurs. Dans une forme de réalisation encore plus élaborée, la chaîne sans fin est agencée de telle sorte que ses rouleaux fous supportent également le brin supérieur des bras retours des transporteurs.

Mais l'invention sera encore illustrée, sans être aucunement limitée, par la description suivante d'un mode de réalisation particulier, donné uniquement à titre d'exemple et représenté sur les dessins annexés dans lesquels :
- la figure 1 est une vue schématique, de côté, illustrant le principe du dispositif de transfert conforme à la présente invention ;
- la figure 2 est un schéma synoptique illustrant les moyens de gestion du dispositif de transfert ;
- la figure 3 montre le dispositif correspondant vu de dessus avec des moyens de détection particuliers de la position des produits sur le transporteur d'entrée ;
- la figure 4 détaille la structure particulière des moyens supports de bande qui utilisent la chaîne sans fin reliant les deux chariots supérieur et inférieur.

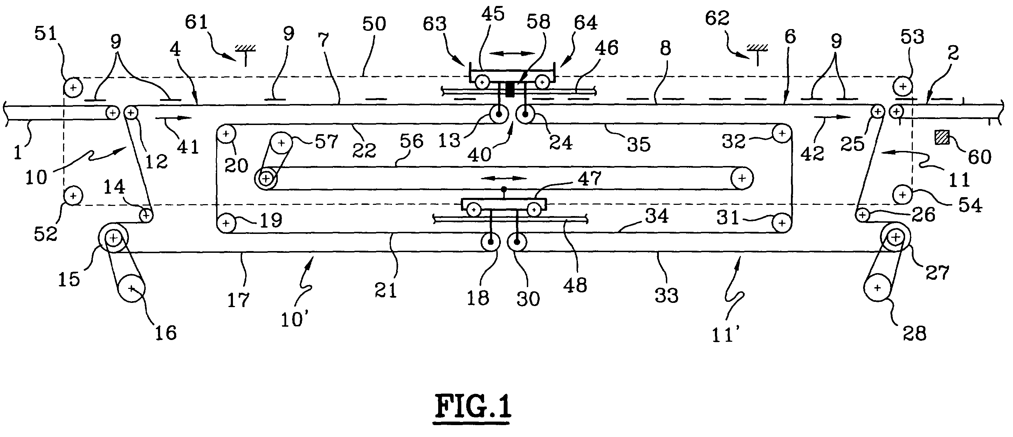

Le dispositif de transfert représenté sur la figure 1 est placé entre un appareil amont qui débite les produits sur un tapis transporteur 1 et un appareil récepteur aval alimenté par un tapis transporteur 2.

L'appareil amont peut par exemple être une installation de cuisson/refroidissement ou une installation d'enrichissement (fourrage, dépose de chocolat ...) et l'appareil aval une autre installation d'enrichissement ou une unité de conditionnement.

Le système de transfert proprement dit est constitué d'un transporteur d'entrée 4 et d'un transporteur de sortie 6 disposés dans la continuité l'un de l'autre et adaptés pour réaliser la jonction entre les transporteurs 1 et 2 précités.

Les transporteurs d'entrée 4 et de sortie 6 sont orientés dans le même sens ; ils comportent tous deux un brin actif supérieur, respectivement 7 et 8, qui supportent les produits 9 en cours de transfert et qui s'étendent sensiblement dans le même plan. Le plan de transfert des produits 9 sera en principe horizontal ; pour des applications particulières, fonction des machines amont et aval, il pourra être prévu incliné, ascendant ou descendant.

Les deux transporteurs sans fin 4 et 6 sont du type à accumulation de bande et ils sont portés par un bâti commun non représenté. La nature de la bande ou de la toile sans fin utilisée sera fonction de l'application envisagée.
Le brin actif supérieur 7 du transporteur d'entrée 4 se prolonge au niveau de son extrémité amont par un retour coudé 10 qui sert au stockage de l'excès de bande.
Le bras terminal 10' du retour 10 est disposé sous le brin actif 4 et il est sensiblement parallèle à ce dernier; le transporteur 4 présente ainsi une configuration générale en forme de C.
Le brin actif supérieur 8 du transporteur de sortie 6 se prolonge au niveau de son extrémité aval par un retour coudé 11 qui sert au stockage de l'excès de bande. Le bras terminal 11' du retour 11 est disposé sous le brin actif 8 et il est sensiblement parallèle à ce dernier; le transporteur 6 présente ainsi une configuration générale en C inversé.

Les deux transporteurs 4 et 6 sont guidés par tout un ensemble de rouleaux de renvoi et/ou de tension.

Le brin actif 7 du transporteur d'entrée 4 est délimité par deux rouleaux fous 12 et 13. Le rouleau fou 12 est fixe ; il est placé en regard de l'extrémité du transporteur 1. Le rouleau fou 13 définit l'extrémité aval ou le "bec" du transporteur d'entrée 4.
A partir du rouleau fou 12, la bande sans fin passe sur un rouleau de tension 14 avant de s'enrouler sur un rouleau d'entraînement 15 assujetti à la motorisation 16.

Depuis le rouleau motorisé 15, la bande sans fin définit le brin inférieur horizontal 17 du bras 10', jusqu'au rouleau fou d'extrémité 18. Ce rouleau d'extrémité 18 définit l'extrémité amont du transporteur d'entrée 4.

A partir du rouleau d'extrémité 18 la bande sans fin est orientée vers un ou plusieurs rouleaux fous de renvoi 19, 20 et elle retourne vers le rouleau d'extrémité aval 13. Depuis le rouleau fou 18 et jusqu'au rouleau de renvoi 19, la bande forme le brin supérieur horizontal 21 du bras retour 10' ; à partir du rouleau de renvoi 20 et jusqu'au rouleau fou d'extrémité 13, la bande forme le brin inférieur horizontal 22, parallèle au brin actif 7.

Le brin actif 8 du transporteur de sortie 6 s'étend entre deux rouleaux fous 24 et 25. Le rouleau 25 est fixe ; il est disposé en regard de l'extrémité du transporteur 2. Le rouleau fou 24 forme l'extrémité amont ou le "bec" du transporteur de sortie 6 ; il fait face au bec du transporteur d'entrée. A partir du rouleau 25, la bande sans fin s'étend jusqu'à un rouleau de tension 26, à partir duquel elle est orientée vers un rouleau d'entraînement 27 assujetti à la motorisation 28. La bande sans fin s'étend ensuite jusqu'au rouleau fou 30, qui forme l'extrémité amont du transporteur de sortie 6, à partir duquel elle retourne vers le rouleau fou 24 par l'intermédiaire d'un ou de plusieurs rouleaux de renvoi 31, 32. Le tronçon de bande situé entre le rouleau motorisé 27 et le rouleau d'extrémité 30 définit le brin inférieur horizontal 33 du bras retour 11'. Le tronçon de bande situé entre le rouleau d'extrémité 30 et le rouleau de renvoi 31 définit le brin supérieur horizontal 34 du bras 11' et le tronçon de bande situé entre le rouleau de renvoi 32 et le rouleau d'extrémité 24 définit le brin inférieur horizontal 35, parallèle au brin actif 8.

L'extrémité aval du transporteur d'entrée 4 et l'extrémité amont du transporteur de sortie 6 sont disposées à proximité l'une de l'autre ; elles forment le front de transition 40 du système de transfert, entre les deux rouleaux 13 et 24. L'extrémité amont du transporteur d'entrée 4 et l'extrémité aval du transporteur de sortie 6 sont également disposées à proximité l'une de l'autre. En fait, la juxtaposition des deux transporteurs 4 et 6 forme pratiquement une boucle fermée.

Le rouleau motorisé 15 entraîne le transporteur d'entrée 4 dans le sens de la flèche d'orientation 41 et le rouleau motorisé 27 entraîne le transporteur de sortie 6 dans le sens de la flèche d'orientation 42, de telle sorte que les brins actifs 7 et 8 se déplacent dans le même sens, dans le but de transférer les produits depuis le transporteur 1 jusqu'au transporteur 2. Les motorisations 16 et 28 sont indépendantes et elles permettent d'entraîner les transporteurs 4 et 6 à des vitesses différentes variables.

Les axes des rouleaux d'extrémités 13 et 24, respectivement du convoyeur d'entrée 4 et du convoyeur de sortie 6, sont portés par un chariot mobile supérieur 45 guidé sur des rails 46 qui sont solidaires du bâti de l'installation et qui s'étendent parallèlement au plan de déplacement des produits 9. Le chariot 45 consiste en un cadre métallique dont les faces latérales sont munies de roulettes qui se déplacent sur le chemin de roulement défini par les rails 46.
A l'autre extrémité des transporteurs, les axes des rouleaux fous 18 et 30 sont portés par un chariot mobile inférieur 47 guidé sur des rails 48. Les rails 48 sont solidaires du bâti de l'installation et ils s'étendent parallèlement aux rails supérieurs 46.

Les deux chariots mobiles 45 et 47 sont reliés par un dispositif du type à chaîne sans fin 50 représentée en pointillés sur la figure 1. Ce dispositif consiste plus particulièrement en deux chaînes sans fin latérales disposées de part et d'autre des chariots 45 et 47 pour assurer un guidage précis de ces derniers sur leurs rails respectifs 46 et 48. Les chaînes sans fin 50 qui peuvent être du type à courroie crantée, s'enroulent sur des poulies ou galets de renvoi fous 51, 52, 53 et 54.

Selon la configuration qui vient d'être décrite, on comprend que la position du front de transition 40, entre les rouleaux 13 et 24, peut varier en fonction du déplacement du chariot supérieur 45 sur son système de rails 46. D'autre part, le chariot inférieur 47 se déplace simultanément d'une distance égale mais en sens inverse. L'entraînement des chariots 45 et 47 peut être réalisé par l'intermédiaire d'un pignon moteur aménagé à la place de l'une des poulies de renvoi 51, 52, 53 ou 54.
Dans le mode de réalisation représenté sur la figure 1, on a prévu un système d'entraînement complémentaire, en forme de chaîne sans fin 56 entraînée par une motorisation 57 et sur l'un des brins de laquelle est fixé le chariot inférieur 47.
La motorisation 57 est du type comportant un résolveur interne pour connaître en permanence la position des chariots et donc celle du front de transition 40. On peut utiliser un moteur du genre brushless ; l'installation comporte une procédure d'initialisation qui permet de lui donner une référence absolue.

Par ailleurs, le chariot supérieur 45 porte des moyens 58 qui permettent de déterminer la position des produits 9 sur le transporteur d'entrée 4. Ces moyens peuvent être constitués d'une cellule de détection de type photoélectrique coopérant avec un faisceau lumineux ou laser généré par une source adaptée. Ce faisceau s'étend perpendiculairement au sens de déplacement des produits 9 et sur le trajet de ces derniers de sorte à être intercepté par leur présence. Les moyens de détection 58 sont agencés pour détecter les produits 9 juste en amont du front de transition 40 pour avoir la meilleure précision.

D'autre part, l'installation conforme à la présente invention comporte également des moyens qui permettent de déterminer l'endroit où doit être déposé chaque produit 9 sur le transporteur de sortie 6, en fonction des besoins de la machine réceptrice aval.
Ces moyens peuvent être constitués d'un système 60 qui détecte la position de godets, taquets ou autres sur le tapis d'alimentation 2.

A noter sur la figure 1 la présence d'interrupteurs de fin de course 61 et 62 qui coopèrent avec des butées respectivement 63 et 64 aménagées sur le chariot supérieur 45. Ces butées et interrupteurs limitent le déplacement du chariot supérieur 45 le long du plan de transfert des produits ; ils peuvent être adaptés pour stopper les fonctionnements respectifs des machines amont et aval, selon le cas.

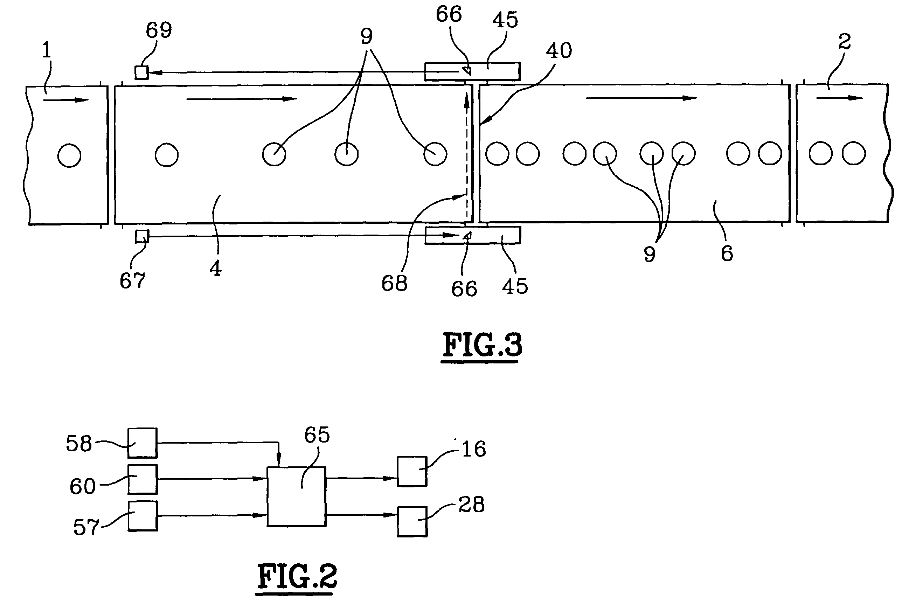

Le fonctionnement de l'installation est géré par une logique de commande programmée, en forme de moyens électroniques et informatiques 65, figure 2, qui pilotent le déplacement du front de transition 40 et, éventuellement, les vitesses des transporteurs d'entrée 4 et de sortie 6, en fonction du flux de produits 9 que l'on désire obtenir pour alimenter l'appareil récepteur aval.
Les moyens électroniques et informatiques 65 reçoivent leurs informations de la cellule 58, des moyens de détection 60 et du résolveur intégré dans la motorisation 57. En fonction de la position du produit 9 détecté par la cellule 58 en amont du front de transition 40, et en fonction du positionnement désiré de ce produit sur le transporteur d'alimentation 2 et par conséquent sur le transporteur de sortie 6, ces moyens de gestion commandent le déplacement du front de transition 40 par actionnement de la motorisation 57, dans un sens ou dans l'autre. Le résolveur interne de la motorisation 57 renseigne en permanence les moyens de gestion 65 sur la position des chariots 45 et 47. Connaissant ce positionnement à tout moment, les moyens logiques 65 déplacent le chariot supérieur 45 selon les besoins, en actionnant convenablement la motorisation 57.

Comme la cellule 58 détecte la position de chaque produit sur le transporteur d'entrée 4, le flux des produits 9 provenant de la machine amont peut être anarchique. A partir de ce flux d'alimentation, en jouant sur la position du front de transition 40 et, éventuellement, sur les vitesses du transporteur d'entrée 4 et/ou celle du transporteur de sortie 6, les produits 9 peuvent être groupés par deux, trois, quatre ou plus, dégroupés, alignés, phasés voire même redressés.

La distribution des produits est réalisée de façon précise, aux endroits voulus. Cette distribution est réalisée sans contact des produits les uns avec les autres et cette installation est donc particulièrement adaptée à la manutention automatique de produits fragiles ou ne supportant pas de contacts entre eux. D'autre part, cette installation permet de programmer les regroupements de produits et de changer les types de regroupements de façon instantanée pour les adapter au débit désiré de la machine aval.
La distribution des produits peut être réalisée à un pas régulier ou irrégulier ; de plus des produits de formats différents peuvent être acheminés à l'intérieur du même pas.

Dans la plupart des applications, ce système de transfert fonctionnera pour une seule rangée de produits. Dans le cadre d'applications du type à plusieurs rangées, il pourra être utilisé pour aligner les produits au niveau du front de transition 40, par un choix judicieux des vitesses relatives des transporteurs.

On a représenté sur la figure 2 le système de transfert conforme à la présente invention, vu de dessus. On remarque sur cette figure l'arrivée anarchique des produits 9 sur le transporteur d'entrée 4, avant le front de transition 40. En aval de ce front de transition 40, les produits sont phasés deux par deux pour alimenter l'appareil récepteur aval.

Pour l'installation représentée sur cette figure, on a prévu des moyens de détection 58 particuliers. Ces moyens sont constitués de deux prismes 66 disposés en vi-à-vis et portés par le chariot mobile supérieur 45. Ces prismes 66 orientent un faisceau provenant d'une source émettrice 67, de type laser par exemple, solidaire du bâti de l'installation. Entre les deux prismes 66 le faisceau 68 détecte la position des produits 9 en amont du front de transition 40 ; le faisceau incidant est réceptionné par une cellule réceptrice 69 de nature adaptée, également solidaire du bâti de l'installation.
Ce mode de réalisation particulier évite d'embarquer l'intégralité des moyens de détection sur le chariot mobile 45 ; ainsi, aucun des câbles d'alimentation, que ce soit de l'émetteur 67 ou du récepteur 69 n'est connecté à un organe mobile. Une telle structure peut être utilisée dans le cadre de toute installation nécessitant un système de détection associé à un organe en déplacement.

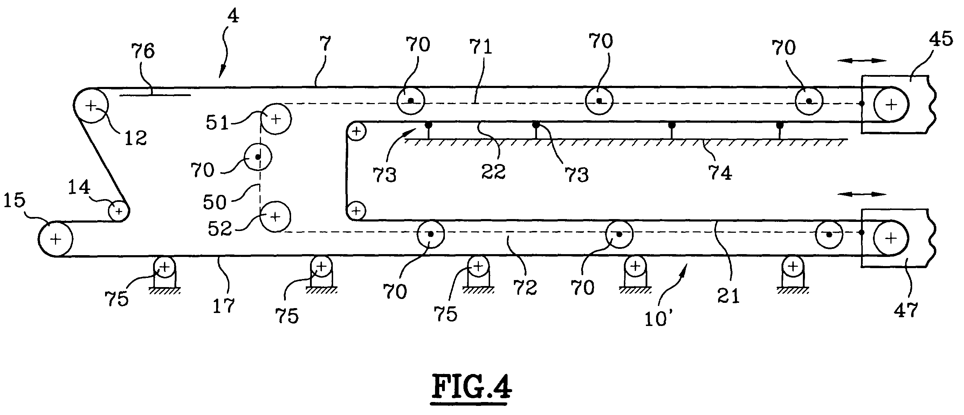

Par ailleurs, pour éviter que la toile fouette l'installation comporte avantageusement des moyens qui permettent de soutenir les différents brins de toile horizontaux ou sensiblement horizontaux des transporteurs d'entrée 4 et de sortie 6. Ces moyens de soutien particuliers sont détaillés sur la figure 4 où seul le transporteur d'entrée 4 a été représenté. Des moyens de soutien identiques sont également prévus sur le transporteur de sortie 6.

Sur cette figure 4, on retrouve la configuration générale du transporteur d'entrée 4 en forme de C avec le chariot supérieur 45 et le chariot inférieur 47 reliés par les chaînes sans fin latérales 50. Les chaînes parallèles 50 sont utilisées pour soutenir une partie du trajet de la toile du transporteur ; à cet effet, elles sont munies de rouleaux fous 70 régulièrement répartis sur leur longueur et elles sont positionnées d'une façon particulière par rapport à la toile du transporteur pour remplir cette fonction de soutien.
Les rouleaux fous 70 s'étendent entre les deux chaînes parallèles 50 et les extrémités de leurs axes sont fixées de façon appropriée sur ces chaînes.
Les brins supérieurs 71 des chaînes 50 sont disposés juste sous le brin actif 7 du transporteur 4. D'autre part, après renvoi sur les poulies folles 51 et 52, leur brin inférieur 72 est positionné juste sous le tronçon de bande 21 du transporteur 4. Du fait de leur montage sur les chaînes 50 qui assurent le déplacement des chariots mobiles 45 et 47, les rouleaux fous 70 suivent le mouvement de ces chariots et ils assurent un soutien correct et permanent des tronçons de bande à longueur variable 7 et 21.
Les tronçons de bande 22 et 17 du transporteur 4 peuvent être soutenus par des moyens fixes solidaires du châssis de l'installation car les moyens de soutien en question ne sont pas susceptibles d'être gênés par le déplacement des chariots mobiles 45 et 47. A cet effet, sous le tronçon de bande 22, on prévoit la présence de joncs transversaux 73 qui peuvent être solidaires de tiroirs latéraux 74. Dans le cas d'une application au transfert de produits effritables tels que des biscuits par exemple, ces tiroirs 74 sont adaptés pour récupérer les miettes susceptibles de glisser entre le transporteur d'entrée 4 et le transporteur de sortie 6 au niveau du front de transition 40.
Pour soutenir le tronçon inférieur 17 du bras retour 10', on prévoit un ensemble de rouleaux fous 75 solidaires du châssis de l'installation.
D'autre part, sous la partie amont du brin actif 7 du transporteur 4, on peut prévoir un élément de soutien fixe 76, en forme de sole plane par exemple.

A noter que cette structure de soutien utilisant la chaîne sans fin 50 qui relie les deux chariots mobiles 45 et 47 peut être utilisée indépendamment du principe de transfert faisant l'objet de la présente invention. Ainsi, ce genre de structure peut très bien être utilisée dans le cadre d'une installation du type de celle décrite dans le document FR-2 499 033 présenté dans le préambule de la présente description.

Le mode de réalisation qui vient d'être décrit en détail n'est nullement limitatif ; il peut se voir modifié ou aménagé sans sortir du cadre de protection tel que défini par les revendications.
Ainsi, à titre indicatif, les moyens mécaniques d'entraînement des chariots supérieurs et inférieurs pourraient être constitués de deux crémaillères mobiles portant lesdits chariots et entraînées par un pignon motorisé disposé entre elles.
Egalement, le transporteur de sortie 6 pourrait faire partie intégrante de la machine aval et être constitué d'un tapis à godets ou à taquets. Dans ce cas, le tapis d'entrée sera disposé au-dessus dudit tapis à godets ou à taquets.

Les signes de référence insérés après les caractéristiques techniques mentionnées dans les revendications ont pour seul but de faciliter la compréhension de ces dernières et n'en limitent aucunement la portée.

## Revendications

1. Procédé pour positionner précisément des produits sur un système de transfert en vue d'alimenter un appareil récepteur aval, ledit système de transfert étant constitué d'un transporteur d'entrée (4) et d'un transporteur de sortie (6) entre lesquels est défini un front de transition (40) à position variable, caractérisé en ce qu'il consiste à détecter la position de chaque produit (9) en amont du front de transition (40) puis, à partir de chaque détection, à ajuster la position dudit front de transition (40) pour assurer un positionnement correct du produit (9) sur le transporteur de sortie (6), en fonction des besoins de l'appareil récepteur aval.

2. Dispositif pour la mise en oeuvre du procédé selon la revendication 1, caractérisé en ce qu'il comporte:
- des moyens (58) qui permettent de déterminer la position des produits (9) sur le transporteur d'entrée (4),
- des moyens (60) qui permettent de déterminer l'endroit où doit être déposé le produit (9) sur le transporteur de sortie (6),
- des moyens qui permettent de déterminer la position du front de transition (40) et,
- des moyens qui permettent de déplacer ledit front de transition (40) pour le placer de telle sorte que le produit (9) soit déposé à l'endroit correct prédéterminé sur le transporteur de sortie (6).

3. Dispositif selon la revendication 2, caractérisé en ce qu'il est constitué :
- d'un transporteur d'entrée (4) et d'un transporteur de sortie (6) disposés dans la continuité l'un de l'autre, orientés dans le même sens et dont les brins actifs (7 et 8) qui supportent les produits (9) s'étendent sensiblement dans le même plan, lesdits transporteurs (4 et 6) étant assujettis à des moyens moteurs (16, 28) qui permettent de leur conférer une vitesse différente et lesdits transporteurs (4, 6) définissant un front de transition (40) entre l'extrémité aval du brin actif (7) du transporteur d'entrée (4) et l'extrémité amont du brin actif (8) du transporteur de sortie (6),
- de moyens qui permettent de faire varier la position du front de transition (40) entre l'appareil amont et l'appareil aval, et,
- de moyens de détection (58) de la position des produits en amont dudit front de transition (40), lesquels moyens de détection sont reliés à des moyens de gestion électroniques et informatiques (65), qui commandent, notamment, le déplacement dudit front de transition (40), en fonction du positionnement des produits (9) que l'on veut obtenir sur le transporteur de sortie (6), fonction des besoins de l'appareil aval.

4. Dispositif selon la revendication 3, caractérisé en ce qu'il comporte des moyens moteurs distincts (16, 28) pour l'entraînement des transporteurs d'entrée (4) et de sortie (6).

5. Dispositif selon l'une quelconque des revendications 3 ou 4, caractérisé en ce qu'il comporte deux transporteurs (4 et 6) du type à accumulation de bande munis chacun d'un brin actif supérieur (7, 8) et d'un retour inférieur coudé (10, 11) qui sert au stockage de l'excès de bande.

6. Dispositif selon la revendication 5, caractérisé en ce que l'extrémité amont du brin actif (7) du transporteur d'entrée (4) et l'extrémité aval du brin actif (8) du transporteur de sortie (6) sont immobiles pour définir une longueur totale fixe des deux brins actifs des transporteurs (4, 6), le brin actif supérieur (7, 8) de chaque transporteur ayant une longueur variable, fonction de la position du front de transition mobile (40).

7. Dispositif selon la revendication 6, caractérisé en ce que l'extrémité aval du transporteur d'entrée (4) et l'extrémité amont du transporteur de sortie (6) sont portées par un chariot supérieur (45) guidé sur des rails (46) parallèles aux brins actifs (7, 8) desdits transporteurs (4, 6), lequel chariot (45) permet le déplacement du front de transition (40) des deux transporteurs (4, 6) et lequel chariot (45) porte les moyens de détection (58) de la position des produits (9) en amont du front de transition (40).

8. Dispositif selon la revendication 7, caractérisé en ce qu'il comporte des transporteurs (4, 6) à bande sans fin dont les retours inférieurs (10, 11) se rejoignent pour former une boucle fermée, l'extrémité amont du transporteur d'entrée (4) et l'extrémité aval du transporteur de sortie (6) étant portées par un chariot inférieur (47) guidé sur des rails (48) parallèles aux brins actifs (7, 8) desdits transporteurs (4, 6).

9. Dispositif selon la revendication 8, caractérisé en ce qu'il comporte des chariots supérieur (45) et inférieur (47) reliés par un système mécanique qui permet leur assujettissement pour assurer leur déplacement simultané, égal et en sens opposé.

10. Dispositif selon l'une quelconque des revendications 8 ou 9, caractérisé en ce que le système mécanique qui relie les deux chariots supérieur (45) et inférieur (47) consiste en une chaîne sans fin (50) montée sur des organes fous de renvoi (51, 52, 53, 54), l'entraînement du chariot inférieur (47) étant assuré par un système complémentaire, du type à chaîne sans fin motorisée (56) dont la motorisation (57) est assujettie aux moyens de gestion électroniques et informatiques (61).

11. Dispositif selon la revendication 9, caractérisé en ce que le système mécanique qui relie les deux chariots supérieur (45) et inférieur (47) est constitué d'une chaîne sans fin (50) montée sur des organes de renvoi (51, 52, 53, 54) dont l'un est motorisé pour assurer le déplacement du front de transition (40).

12. Dispositif selon l'une quelconque des revendications 9 à 11, caractérisé en ce que le système a chaînes sans fin (50) qui relie les deux chariots supérieur (45) et inférieur (47) supporte des moyens de soutien, en forme de rouleaux fous (70) par exemple, adaptés pour supporter une partie au moins des brins actifs (7, 8) des transporteurs (4, 6).

13. Dispositif selon la revendication 12, caractérisé en ce que le système à chaînes sans fin (50) est agencé de telle sorte que ses rouleaux fous (70) supportent également le brin supérieur (21) des bras retours (10', 11') des transporteurs (4, 6).

14. Dispositif selon l'une quelconque des revendications 7 à 13, caractérisé en ce qu il comporte des moyens de détection (58) constitués de deux prismes (66) en vis-à-vis embarqués sur le chariot (45) et associés a une source émettrice de faisceau (67) et à une cellule réceptrice (69) solidaires du bâti de l'installation.
